# EUROPEAN PATENT SPECIFICATION

(11) **EP 2 778 389 B1**
(45) Date of publication and mention of the grant of the patent: **02.11.2016**
(21) Application number: 13159219.8
(22) Date of filing: 14.03.2013
(51) Int. Cl.: F03D 1/00, F03D 1/06

(54) **Tool for mounting rotor blades on a rotor hub, offshore construction device and method of assembling a wind generator**
Werkzeug zur Montage von Rotorblättern an eine Rotornabe, Offshore-Konstruktionsvorrichtung und Verfahren zur Montage eines Windgenerators
Outil de montage de pales de rotor sur un moyeu de rotor, dispositif de construction offshore et procédé d'assemblage d'une éolienne

(43) Date of publication of application: 17.09.2014
(73) Proprietor: Areva Wind GmbH, 27572 Bremerhaven (DE)
(72) Inventor: Wolzenburg, Holger, 28357 Bremen (DE)
(74) Representative: Prinz & Partner mbB

(56) References cited:
- EP-A1- 2 354 537

## Description

### FIELD OF THE INVENTION

The invention relates to a tool for mounting rotor blades on a rotor hub of a wind generator and to an offshore construction device comprising the tool. Furthermore, the invention relates to a method of assembling a wind generator.

### BACKGROUND

During construction or erection of a wind generator (also known as a wind turbine or a wind driven power plant), a shaft flange of a rotor hub is coupled to a shaft of a drive train of the wind generator and rotor blades are mounted on corresponding blade flanges of the rotor hub. A single blade assembly of the rotor blades on the rotor hub is, however, time consuming. It is known to pre-manufacture the rotor star, which is the rotor hub together with the mounted rotor blades. In particular for offshore wind generators, the rotor star may be pre-assembled onshore. In other words, the rotor blades are mounted on the corresponding blade flanges of the rotor hub at an onshore production facility. After assembly, the rotor star is transferred to a transport ship and transported to the offshore construction site of the wind generator. For smaller wind generators, a plurality of rotor stars may be stacked on top of each other for transport on the transport ship. However, modern rotor stars for multi mega watt wind generators may not be stacked due to their considerable weight and size. Consequently, the rotor stars are transported individually. This however causes high transport expenses because the transport ship, for example jack-up barge, has a considerable rate of about 250.000 € per day. Furthermore, narrow port facilities may limit the operation of the transport ship. For handling of large rotor stars, conversion works at the harbor may be necessary, which causes high expenses for the manufacturer of the wind generator.

DE 10 2009 011 915 A1 discloses a facility for offshore assembly of rotor blades on a rotor hub. The rotor hub and the rotor blades are shipped to the offshore construction site using a jack-up barge. A first blade is pre-mounted on the rotor hub prior to shipment. The second and the third rotor blade are mounted at the offshore construction site. The jack-up barge comprises a carrier for the second and third rotor blade. The carriers operate on rail systems. They are for aligning the rotor blades with respect to the rotor hub, which remains fixed during installation of the rotor blades. However, the rail systems and the carriers are rather complex. Furthermore, the disclosed jack-up barge is capable of assembling a single rotor star only.

EP 2 354 537 A1 discloses a method and a device for assembling a wind turbine at sea. The device comprises a support structure that is provided with means for rotating the hub of a rotor around the hub's longitudinal axis. The support structure is further adapted to be connected to an off-shore platform such that the rotating means maybe positioned outside the periphery of the platform. However, the mechanism for mounting the rotor blades to the hub is not simple enough and can be further improved.

### SUMMARY

It is an object of the invention to provide a tool for mounting rotor blades on a rotor hub, an offshore construction device and a method of assembling a wind generator which allow a faster and more economic assembly of a wind generator.

The object is achieved by the subject matter of the independent claims.

In one aspect of the invention a tool for mounting rotor blades on a rotor hub of a wind generator is provided. The tool may comprise a first part and a second part. The first part may be configured to be mounted on a base plane of a mounting device. The second part may be configured to receive a shaft flange of the rotor hub. The shaft flange of the rotor hub may be configured to be mounted on a shaft of a drive train of the wind generator, when the rotor hub is mounted on a wind generator. The second part of the tool may be configured to receive this particular flange of the rotor hub. Furthermore, the second part of the tool may be rotatable with respect to the first part.

The first part may be a substantially cylindrical member. A bearing may be arranged between the first part and the second part, to allow a rotation between the two parts of the tool. A load bearing capability of the tool may be sufficiently high to carry a load of the rotor hub including the rotor blades. Furthermore, the load bearing capability of the tool may be sufficiently high to bear tilting or bending moments which may occur when the rotor hub is not equipped with all rotor blades at a same time. For example, there might be a significant tilting moment when only one rotor blade is mounted on the rotor hub.

Advantageously, the tool according to aspects of the invention simplifies the assembly of rotor blades on the rotor hub. A crane may be applied for handling of the rotor blades during assembly. However, a crane typically offers a limited working area. It is likely that there is an optimal working position within the working area of the crane for assembly of the rotor blade on the rotor hub. Without a need for any additional tools or devices, the tool for mounting rotor blades on a rotor hub according to aspects of the invention allows rotating the rotor hub into this optimal position for assembly of every single rotor blade. The assembly of the rotor blades may be performed one after the other in a row. This accelerates the assembly process. Advantageously, this is true for onshore and for offshore assembly of a rotor star. Within the context of this specification, a rotor star comprises a rotor hub and a corresponding number of rotor blades which are mounted on the rotor hub.

According to an embodiment of the invention, the tool further comprises a third part. This part may be arranged between the first part and the second part of the tool. However, the third part may also be arranged between the base plane and the first part of the tool. The third part is configured for tilting a plane of rotation of the second part with respect to the first part.

The third part may be configured to be a static or fixed and rigid part. It therefore defines a constant tilting angle between the plane of rotation of the first part and the base plane of the mounting device. However, the third part may also be configured to provide a variable tilting angle. It may be equipped with a suitable drive, which allows varying the tilting angle. The tilting angle may be between 2° and 5°. In particular, the tilting angle may be between 3° and 4°. Furthermore, it may be substantially equal to 3,5°.

According to an advantageous embodiment of the invention, the tool further comprises a drive unit for rotating the second part with respect to the first part. In particular, the drive unit may be an electric drive, a hydraulic drive or even a mechanical drive. Advantageously, the second part of the tool may be rotated with respect to the first part without a need for any additional devices or tools.

In another embodiment of the invention, the second part of the tool may be rotatable with respect to the first part of the tool in a plane of rotation. Furthermore, the second part may comprise a mount for receiving the shaft flange of the rotor hub. The mount extends in a coupling plane. The plane of rotation and the coupling plane may be arranged to be substantially parallel to each other. The rotor star may be assembled in substantially horizontal position using the tool according to the embodiment of the invention. Advantageously, the rotor blades and the rotor hub are easily accessible when the rotor star is in a horizontal position. For example, the rotor blades may be assembled using a simple lift truck.

In another advantageous embodiment of the invention, the tool further comprises a working platform. The working platform may be arranged on the first part. Furthermore, the working platform may include a floor which may be arranged to be substantially perpendicular to a length extension of the first part. In other words, the floor of the working platform may be substantially parallel to the plane of rotation of the second part of the tool. The working platform may be mounted on the first part in an upper section thereof. In particular, the working platform may be arranged in the upper half or even in the upper quarter of the first part. The working platform may be arranged in the vicinity of the second part of the tool. In particular, the working platform may be circumferential to the first part. Advantageously, the working platform provides easy access to the flanges of the rotor blades and to the blade flanges of the rotor hub. In particular, during insertion of the rotor blades, the working platform may be helpful to perform work relative to guidance of the blade root into the corresponding blade flange of the rotor hub.

According to another advantageous aspect of the invention, an offshore construction device comprising a tool according to aspects of the invention is provided. The first part of the tool may be mounted on a base plane of the mounting device. In particular, the offshore construction device may be a jack-up barge or a construction ship.

The offshore construction device may be configured to carry more than one assembly comprising a rotor hub and a corresponding number of rotor blades for manufacturing a plurality of rotor stars. The offshore construction device is advantageously capable of equipping a plurality of wind generators with rotor stars within a single trip or passage. This reduces the travel time which is necessary for offshore construction of a single wind generator. The fixed costs of for example a jack-up barge are considerable. The more wind generators may be equipped with rotor stars during a single passage, the more cost savings may be expected.

According to an advantageous embodiment of the invention, the second part of the tool may be rotatable with respect to the first part of the tool in a plane of rotation. This plane of rotation may be substantially parallel to the base plane of the offshore construction device. Advantageously, the offshore construction device is suitable for horizontal assembly of the rotor star. The rotor hub and the rotor blades are easily accessible during horizontal assembly. For example, a quality control may be conveniently performed.

In another embodiment of the invention, the offshore construction device may further comprise a crane for handling the rotor blade during assembly of the rotor blade on the rotor hub. The crane may be further configured to be suitable for handling of the rotor hub. Furthermore, the crane may be suitable for handling of the rotor star.

According to another advantageous aspect of the invention, a construction ship or a jack-up barge comprising a tool according to aspects of the invention, is provided. The first part of the tool is mounted on a base plane of the construction ship or the jack-up barge.

According to still another advantageous aspect of the invention, a method of assembling a wind generator is provided. An assembly comprising a rotor hub and an associated number of rotor blades may be transported to a construction site of a wind generator. Within the context of this specification, an assembly comprising the rotor hub and an associated number of rotor blades is an assembly of separate and disassembled parts. In other words, the rotor star is not pre-assembled. In particular, the rotor hub and the associated number of rotor blades are separate to each other during transport of the assembly.

A shaft flange of the rotor hub may be mounted on a tool. The shaft flange of the rotor hub may be configured to be mounted on a shaft of a drive train of the wind generator, when the rotor hub is mounted on the wind generator. The too may be configured to receive this particular flange of the rotor hub. A first rotor blade may be mounted on a first blade flange of the rotor hub. This may be performed when the tool is in a first mounting position. The rotor hub together with the mounted first rotor blade may be rotated on the tool from the first mounting position into a second mounting position. Subsequently, a second rotor blade may be mounted on a second blade flange of the rotor hub.

Same or similar advantages which have been already mentioned with respect to the tool according to aspects of the invention apply to the method of assembling a wind generator in a same or similar way and will be not repeated.

According to an advantageous embodiment of the invention, the rotor hub may comprise a number of blade flanges, wherein each blade flange is configured for mounting a rotor blade on the rotor hub. The rotor star, which is the rotor hub together with the mounted rotor blades, may be lifted to a nacelle of the wind generator. Lifting of the rotor star may be performed after all blade flanges have been equipped with a corresponding rotor blade.

In comparison to single blade assembly, there is advantageously only one lifting operation for mounting the rotor star on the wind generator. Furthermore, a plurality of assemblies for manufacturing a plurality of rotor stars may be transported using for example a jack-up barge. After assembly of a first rotor star on a first wind generator, the jack-up barge may be transferred to a second construction site of a second wind generator. Offshore wind generators are typically arranged in wind parks comprising a plurality of wind generators. There is a short time of travel from one wind generator to the next. The jack-up barge may be used very efficiently for construction of a plurality of wind generators.

According to another advantageous embodiment of the invention, the tool may be arranged on a base plane of a mounting device, for example on a base plane of a jack-up barge. The rotor hub may be rotated together with a mounted first rotor blade, wherein during this rotation, the first rotor blade is pivoted in a plane which may be substantially parallel to the base plane of the mounting device. However, the plane of the rotation may also be tilted. Advantageously, a horizontal assembly of the rotor star may be performed. Each rotor blade may be mounted on the rotor hub in a position which may be optimal for example for a crane which handles the rotor blade during assembly.

In another advantageous embodiment of the invention, each rotor blade flange has a receiving direction along which a rotor blade is mounted on this particular rotor flange. The receiving direction may be substantially perpendicular to a plane of a contact surface of the corresponding blade flange. Neighboring blade flanges of the rotor hub may be spaced by an angle. This angle may be determined between a projection of the receiving directions of neighboring flanges in a plane which is substantially parallel to a contact surface of the shaft flange of the rotor hub. The step of rotating the rotor hub between the first mounting position and the second mounting position may comprise rotating the rotor hub by an angle which is substantially equal to the angle between neighboring blade flanges. Advantageously, the blades of the rotor star may be mounted in optimal position one after the other.

### BRIEF DESCRIPTION OF DRAWINGS

Further aspects and features of the invention ensue from the following description of the preferred embodiments of the invention with reference to the accompanying drawings, wherein
FIG. 1 is a simplified side view of a tool for mounting rotor blades on a rotor hub according to an embodiment of the invention,
FIG. 2 is a simplified top view of an offshore construction device according to an embodiment of the invention, wherein a tool for mounting rotor blades is in a first position,
FIG. 3 is a simplified top view of the offshore construction device of FIG. 2, wherein the tool is in a second position,
FIG.4 is a simplified side view showing an offshore construction device according to an embodiment of the invention, wherein the device is going to lift a rotor star to a nacelle of a wind generator and
FIG. 5 is a simplified side view of a tool for mounting rotor blades on a rotor hub according to another embodiment of the invention.

### DETAILED DESCRIPTION OF EXAMPLE EMBODIMENTS

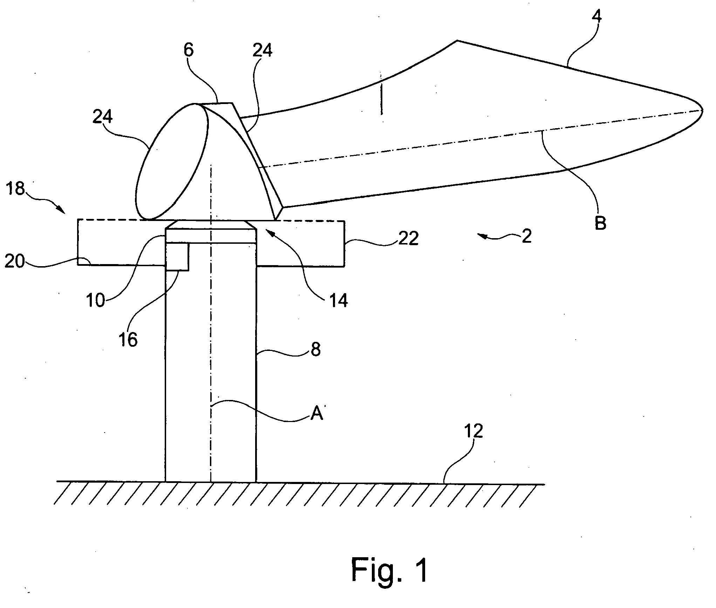

FIG. 1 is a simplified side view of a tool 2 for mounting rotor blades 4 on a rotor hub 6 of a wind generator, according to an embodiment of the invention. The tool 2 may comprise a first part 8 and a second part 10. The first part 8 may be configured to be mounted on a base plane 12 of a mounting device. This mounting device may be an offshore construction site, for example a ship of a jack-up barge. The mounting device may also be an onshore construction site. The tool 2 is advantageously applicable to both, onshore and offshore construction sites for mounting of rotor blades 4 on the rotor hub 6. By way of an example only, reference is made to an offshore construction device, which may be a jack-up barge or a construction ship. The first part 8 of the tool 2 may be coupled to the second part 10 using a suitable bearing. The second part 10 may be rotatable with respect to the first part 8 around a vertical axis A. In particular, the vertical axis A may be substantially perpendicular to the base plane 12.

The second part 10 of the tool 2 may be configured to receive a shaft flange 14 of the rotor hub 6. When the rotor hub 6 is not mounted on the tool 2 but on a wind generator, the shaft flange 14 may be configured for mounting the rotor hub 6 on a shaft of a drive train of the wind generator.

The tool 2 may further comprise a drive unit 16, which may be an electric drive, a hydraulic drive or a even a mechanic drive. The drive unit 16 may be configured for rotating the second part 10 with respect to the first part 8. In particular, the drive unit 16 may be configured to rotate the second part 10 around the vertical axis A. The second part 10 of the tool 2 may be rotated in a plane of rotation which may be substantially perpendicular to the vertical axis A. Furthermore, the second part 10 may comprise a mount for receiving the shaft flange 14 of the rotor hub 6. The mount may extend in a coupling plane which may be further substantially parallel to the plane of rotation. The rotor hub 6 together with one or more mounted rotor blades 4 may be rotated around the vertical axis A, for example using the drive unit 16.

Furthermore, the tool 2 may comprise a working platform 18. The working platform 18 may be mounted on the first part 8 of the tool 2. In particular, the working platform 18 may be mounted on an upper part of the first part 8 of the tool 2, for example at an upper half or an upper quarter of the first part 8. The working platform 18 may be arranged in the vicinity of the second part 10 of the tool 2. A floor 20 of the working platform 18 may project in a plane which is substantially perpendicular to the vertical axis A. The working platform 18 may further comprise a railing 22 which serves as a fall protection for the users of the working platform 18. In particular, the working platform 18 may be circumferential to the first part 8 of the tool 2.

In order to fix the rotor blade 4 on the rotor hub 6, the workers or operators have to reach the interior of the rotor hub 6. This is necessary for installing the blade bolts, for example. The first part 8 of the tool 2 may be provided with an entrance or door, which allows the workers to enter the interior of this part. The entrance may be arranged at the lower part of the first part 8. Access to the interior of the rotor hub 6 may be provided by a ladder or a lift, which is installed inside the tool 2.

According to another embodiment of the invention, the entrance is arranged at the top of the first part 8. It can be reached from the platform 18. Another option to enter the interior of the rotor hub 6 is to climb inside the rotor hub 6 using a ladder between the platform 18 and an empty blade flange 24. One of the previous solutions can be used for the operators to get out of the rotor hub 6 once the last rotor blade 4 is installed.

A working platform may be arranged inside the first part 8 of the tool 2. This platform may be helpful for temporarily fixing the rotor hub 6 on the tool 2. The hub bolts and screws may conveniently be inserted using this inner platform.

The first part 8 and the second part 10 of the tool 2 may be substantially cylindrical members. They may be manufactured from steel. This advantageously applies to all embodiments of the invention.

For assembly of a rotor star of a wind generator, the rotor hub 6 may be arranged on the second part 10 of the tool 2. In particular, the shaft flange 14 of the rotor hub 6 may be arranged on the mount, which may be located at the upper side of the second part 10 of the tool 2. The rotor hub 6 may be temporarily fixed on the mount of the second part 8 of the tool 2. A first rotor blade 4 may be mounted on a first blade flange 24 of the rotor hub 6. The blade 4 may be lifted to the rotor hub 6 and a plurality of screws and bolts, which may extend from a blade root flange of the rotor blade 4, may be inserted in corresponding through holes of the blade flange 24 of the rotor hub 6. After assembly of the first blade 4 on the rotor hub 6, the rotor hub 6 together with the mounted blade 4 may be rotated from a first mounting position into a second mounting position. In the second mounting position, a second rotor blade 4 may be mounted on a second blade flange 24 of the rotor hub 6.

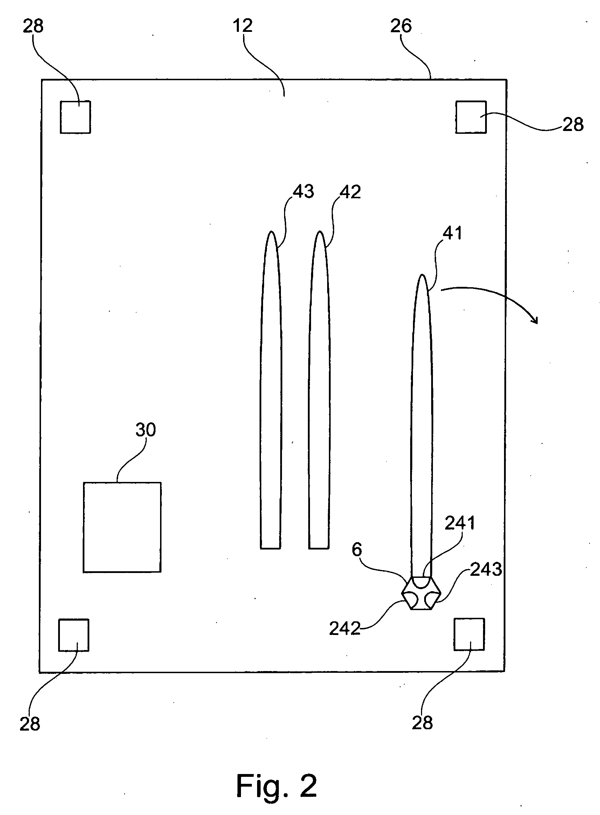

FIG. 2 is a simplified top view of an offshore construction device 26. By way of an example only, the offshore construction device 26 is a jack-up barge. The offshore construction device 26 comprises a variety of parts and units which are omitted due to simplification of the drawings. The offshore construction device 26 comprises a base plane 12. A tool 2 according to an embodiment of the invention is mounted on the base plane 12. In particular, a lower end of the first part 8 of the tool 2 may be mounted on the base plane 12, for example using a plurality of screwed or bolted connections. The offshore construction device 26 may comprise a plurality of supports 28. A lower end of a respective one of the supports 28 may be lowered to the ground of the sea for lifting up the offshore construction device 26. Furthermore, the offshore construction device 26 comprises a crane 30, which may be configured for handling of the rotor blades 4, the rotor hub 6 and / or the rotor star.

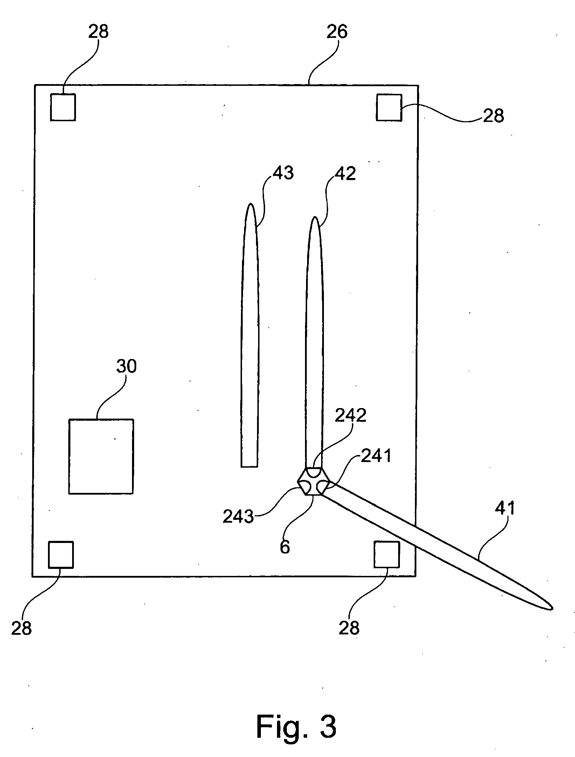

In FIG. 2, the tool 2 (not visible) for mounting rotor blades 41, 42, 43 is in a first position. A first rotor blade 41 is mounted on a first blade flange 241 of the rotor hub 6. Due to a rotation of the second part 10 of the tool 2 with respect to the first part 8, the first rotor blade 41 may be swiveled (indicated by an arrow) in a plane which may be substantially parallel to the base plane 12 of the offshore construction device 26. FIG. 3 shows the offshore construction device 26, which is known from FIG. 2, after rotation of the first rotor blade 41 from the first position (FIG. 2) into a second position. In the second position, a second rotor blade 42 may be mounted on a second blade flange 242 of the rotor hub 6.

The three rotor blades 41, 42, 43 may be mounted on the corresponding three blade flanges 241, 242, 243 of the rotor hub 6 by rotating the rotor hub 6 into subsequent mounting positions. For example, after assembly of the first and second rotor blade 41, 42, the third rotor blade 43 may be mounted on the third blade flange 243 of the rotor hub 6 after the rotor hub 6 has been rotated from the second mounting position (FIG. 3) into the subsequent and third mounting position. In the third mounting position, the third blade flange 243 is located at the position of the second blade flange 242 in the second mounting position (FIG. 3). The rotor blades 41, 42, 43 may be subsequently mounted on the rotor hub 6 using the crane 30.

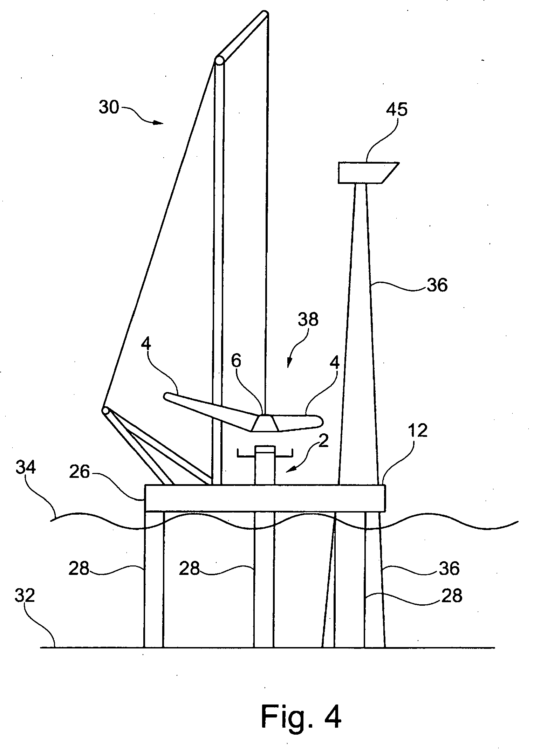

To go from second to third mounting position in Fig.3, the rotor blade 41 is rotated above the support 28, which is lowered like in Fig. 4. More generally, the tool 2 may be positioned in such a way on the platform that the mounting method allows mounting all rotor blades 41, 42, 43 without colliding parts of the platform itself (commanding tower, supports 28, secondary cranes). The tower of the wind turbine under construction is usually very close to the platform during construction. The tool 2 may be positioned so as to avoid a collision with the tower.

The height of the first part 8 can be chosen in order to avoid such collisions (in particular to avoid collision with supports 28 which are always higher than the platform, even when they are in the position of Fig. 4.

A respective one of the blade flanges 24 (FIG. 1) has a receiving direction, which may be substantially parallel to a longitudinal direction B of the rotor blade 4. The receiving direction may be substantially perpendicular to a plane of a contact surface of the corresponding blade flange 24. When the receiving direction is projected in a plane which is substantially perpendicular to the vertical axis A, neighboring blade flanges 24 of the rotor hub 6, according to the embodiment of FIG. 3, are spaced by an angle of 120°. The plane in which the angles between neighboring blade flanges 24 are considered, may be substantially parallel to a contact surface of the shaft flange 14 of the rotor hub 6. When the second part 10 of the tool 2 is rotated with respect to the first part 8, a rotation around this particular angle may be performed. In other words, after assembly of the first blade 41 on the first blade flange 241, the second part 10 of the tool 2 performs a rotation of 120° with respect to the first part 8, in order to enter the second mounting position in which the second rotor blade 42 may be mounted on the second blade flange 242. Similarly, the third rotor blade 43 may be mounted on the third blade flange 243 after another 120°-rotation of the second part 10 of the tool 2.

FIG. 4 is a simplified side view showing the offshore construction device 26 at a construction side of a wind generator. The supports 28 of the offshore construction device 26 are lowered to the ground 32 of the sea 34. A tower 36 of the wind generator, which is under construction, is funded in the sea 34. A tool 2 according to an embodiment of the invention is mounted on the base plane 12 of the offshore construction device 26. The rotor hub 6 has been equipped with the rotor blades 4 to provide a rotor star 38. The latter may be lifted to a nacelle 45 of the wind generator using the crane 30.

In addition to crane 30, there is usually a smaller crane on the jack-up barge. Alternatively, the smaller crane can be used for pre-assembling the rotor star while the nacelle 45 is mounted using the big crane 30. This additional small crane (not shown) may also be applied for preparing the rotor star for the next wind generator, while the big crane 30 is used to install the rotor star on the wind generator, which is presently under construction. This mode of operation will save assembly time.

Advantageously, the offshore construction device 26 may carry a plurality of assemblies for assembling a plurality of rotor stars 38. In other words, the offshore construction device 26 may carry a plurality of rotor hubs 6 and a plurality of rotor blades 4. A respective one of the rotor stars 38 may be assembled on the offshore construction device 26. Subsequent to assembly of the rotor star 38, it may be lifted and mounted on the wind generator. A plurality of wind generators may be equipped with rotor stars 38 during a single tour or passage of the offshore construction device 26.

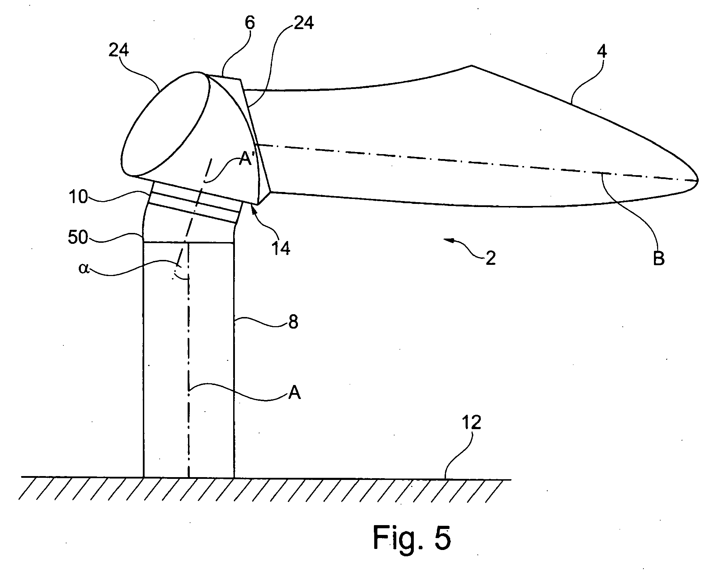

FIG. 5 is a simplified side view showing a tool 2 according to another embodiment of the invention. This embodiment is similar to the embodiment shown in FIG. 1. The same reference numerals denote similar parts of the tool 2. The tool 2 according to the embodiment of FIG. 5 differs from the tool 2, which is shown in FIG. 1, in that it comprises a third part 50. The third part 50 is arranged between the first part 8 and the second part 10 of the tool 2.

In the embodiment of FIG. 5, the plane of rotation of the first part 8 around the rotation axis A' is not perpendicular to the base plane 12. There is an inclination α between the vertical axis A, which is substantially perpendicular to the base plane 12 and the rotation axis A'. This inclination is to compensate the angle between the longitudinal axis B of the rotor blade 4 and the plane, which is defined by the shaft flange 14 of the rotor hub 6.

In modern wind generators, this angle is to space the rotor blade tip away from the tower so as to avoid a collision even when the rotor blade 4 bends under wind forces. The angle α may be between 2° and 5°, in particular between 3° and 4°. In particular, the angle α may be substantially equal to 3.5°.

Advantageously, the third part 50, which is inserted between the first part 8 and the second part 10 compensates the tilting angle of the rotor blade 4. In another embodiment of the invention, the third part 50 may be arranged between the base plane 12 and the first part 8 of the tool 2.

The third part 50 may be configured in that it is a fixed and rigid member, which defines a constant angle α. However, it may be configured to have a variable tilting angle α. For example, the third part 50 may be provided with a hydraulic system or an electric drive, which is configured for varying the tilting angle α.

Tilting the second part 10 of the tool 2 with respect to the base plane 12 is advantageous in that, the rotor blade 4 can be approached to the hub 6, which is supported by the tool 2, in a substantially horizontal direction. This facilitates the rotor blade grabbing and installation. For example, the rotor blade 4 can be lifted with textile straps without risking that the rotor blade 4 slides out of the slopes.

In another advantageous aspect of the invention, a system comprising a tool 2, according to the embodiment of FIG. 5 having a third member 50, and rack for accommodating the rotor blades 4 is be provided (not shown). The rack may have sliding blade supports, which are configured to be displaceable in a direction, which is substantially parallel to the base plane 12. The rack is configured to present the rotor blade 4 at the correct angle for mounting the rotor blade on the hub 6.

In still another advantageous aspect of the invention, a system comprising a tool 2, according to the embodiment of FIG. 1 having no third member 50, and a tilted rack for accommodating the rotor blades 4 is be provided. The rack may have sliding blade supports, which are configured to be displaceable in a direction, which is tilted with respect to the base plane 12. The stacking rack may itself have an inclination of for example between 2° and 5°, in particular between 3° and 4° and In particular of 3.5°. The rotation axis A of the second part 10 of the tool 2 can therefore remain vertical. The compensation of the tilting angle of the rotor blades 4 is performed at the rack level. This rack can have sliding blade supports adapted to present the blade at the correct angle for mounting ("revolver" like mounting method).

More generally, to save space on the jack-up barge, the rotor blades 4 can be stacked or stored near to the mounting position of the tool 2, for example using a rack. This will avoid long distance transporting of the rotor blades 4 using the crane. This lowers the risk for collision and saves mounting time.

## Claims

1. A tool (2) for mounting rotor blades (4) on a rotor hub (6) of a wind generator, the tool comprising a first part (8) and a second part (10), wherein the first part (8) is configured to be mounted on a base plane (12) of a mounting device and the second part (10) is configured to receive a shaft flange (14) of the rotor hub (6), wherein the shaft flange (14) of the rotor hub (6) is configured to be mounted on a shaft of the drive train of the wind generator, and wherein the second part (10) is rotatable with respect to the first part (8) wherein the tool is **characterized by** a third part (50), which is arranged between the first part (8) and the second part (10), wherein the third part (50) is configured for tilting a plane of rotation of the second part (10) with respect to the first part (8).

2. The tool (2) according to claim 1, wherein the second part (10) is rotatable with respect to the first part (8) in a plane of rotation and the second part (10) comprises a mount for receiving the shaft flange (14) of the rotor hub (6), wherein the mount extends in a coupling plane, and wherein the plane of rotation and the coupling plane are substantially parallel to each other.

3. The tool according to claim 1 or 2, wherein the third part (50) is a rigid member, which defines a constant tilting angle (α) between the plane of rotation of the first part (8) and the base plane of the mounting device.

4. The tool according to anyone of claims 1 to 3, wherein the tilting angle (α) is between 2° and 5°, in particular the tilting angle (α) is between 3° and 4° and in particular, the tilting angle is substantially equal to 3,5°.

5. The tool according to anyone of the preceding claims, further comprising a drive unit (16) for rotating the second part (10) with respect to the first part (8).

6. The tool according to anyone of the preceding claims, further comprising a working platform (18) which is arranged on the first part (8), wherein the working platform (18) is arranged inside and / or outside the first part (8).

7. The tool according to anyone of the preceding claims, wherein the first part (8) comprises an entrance, which allows a service worker to enter the interior of the hub.

8. An offshore construction device comprising a tool according to anyone of the preceding claims, wherein the first part (8) of the tool is mounted on a base plane (12) of the offshore construction device.

9. The offshore construction device according to claim 8, wherein the second part (10) is rotatable with respect to the first part (8) of the tool in a plane of rotation, and wherein the plane of rotation is substantially parallel to the base plane (12) of the offshore construction device.

10. The offshore construction device according to claim 8, wherein the tool further comprises a third part (50), which is arranged between the first part (8) and the second part (10), wherein the third part (50) is configured for tilting a plane of rotation of the second part (10) with respect the base plane (12) of the offshore construction device.

11. The offshore construction device according to anyone of claims 8 to 10, further comprising a crane (30) for handling the rotor blade (4) during assembly of the rotor blade (4) on the rotor hub (6).

12. A construction ship or a jack-up barge comprising a tool (2) according to anyone of claims 1 to 7, wherein the first part (8) of the tool (2) is mounted on a base plane (12) of the construction ship or the jack-up barge.

13. A method of assembling a wind generator, the method comprising the steps of:
a) transporting an assembly of a rotor hub (6) and associated rotor blades (4) to a construction site of the wind generator,
b) temporarily mounting a shaft flange (14) of the rotor hub (6) on a tool (2), wherein the shaft flange (14) of the rotor hub (6) is configured to be mounted on a shaft of a drive train of the wind generator,
c) mounting a first rotor blade (41) on a first blade flange (241) of the rotor hub (6), when the tool (2) is in a first mounting position,
d) rotating the rotor hub (6) together with the mounted first rotor blade (41) on the tool (2) from the first mounting position into a second mounting position,
e) mounting a second rotor blade (42) on a second blade flange (242) of the rotor hub (6), **characterized in that**
the tool (2) is arranged on a base plane (12) of a mounting device, and wherein the step of rotating the rotor hub (6) together with the mounted first rotor blade (41) comprises pivoting the mounted first rotor blade (41) in a plane which is tilted with respect to the base plane (12) of the mounting device due to a third part (50) which is arranged between the first part (8) and the second part.

14. The method according to claim 13, wherein the rotor hub (6) comprises a number of blade flanges (241, 242, 243)" and wherein each blade flange (241, 242, 243) is configured for mounting a rotor blade (41, 42, 43) on the rotor hub (6), and the method further comprises the step of lifting the rotor hub (6) together with the mounted rotor blades (41, 42, 43) to a nacelle (45) of the wind generator after all blade flanges (241, 242, 243) of the rotor hub (6) have been equipped with the corresponding rotor blade (41, 42, 43)

15. The method according to claim 13 or 14, wherein the tool (2) is arranged on a base plane (12) of a mounting device, and wherein the step of rotating the rotor hub (6) together with the mounted first rotor blade (41) comprises pivoting the mounted first rotor blade (41) in a plane which is substantially parallel to the base plane (12) of the mounting device.

16. The method according to anyone of claims 13 to 15, wherein each of the rotor blade flanges (241, 242, 243) of the rotor hub (6) has a receiving direction along which a rotor blade (41, 42, 43) is mounted on the rotor flange, wherein neighboring flanges (241, 242, 243) of the rotor hub (6) are spaced by an angle which is determined between a projection of the receiving directions of neighboring blade flanges (241, 242, 243) in a plane which is substantially parallel to a contact surface of the shaft flange (14) of the rotor hub (6), and wherein the step of rotating the rotor hub (6) between the first mounting position and the second mounting position comprises rotating the rotor hub (6) by an angle which is substantially equal to the angle between neighboring blade flanges (241, 242, 243).

## Patentansprüche

1. Werkzeug (2) zum Befestigen von Rotorblättern (4) an einer Rotornabe (6) einer Windkraftanlage, wobei das Werkzeug einen ersten Teil (8) und einen zweiten Teil (10) umfasst, wobei der erste Teil (8) zur Befestigung auf einer Basisebene (12) einer Befestigungsvorrichtung ausgeführt ist und der zweite Teil (10) zur Aufnahme eines Wellenflansches (14) der Rotornabe (6) ausgeführt ist, wobei der Wellenflansch (14) der Rotornabe (6) zur Befestigung an einer Welle des Antriebsstrangs der Windkraftanlage ausgeführt ist und wobei der zweite Teil (10) bezüglich des ersten Teils (8) drehbar ist, wobei das Werkzeug **gekennzeichnet ist durch** einen dritten Teil (50), der zwischen dem ersten Teil (8) und dem zweiten Teil (10) angeordnet ist, wobei der dritte Teil (50) dazu ausgeführt ist, eine Drehebene des zweiten Teils (10) bezüglich des ersten Teils (8) zu neigen.

2. Werkzeug (2) nach Anspruch 1, wobei der zweite Teil (10) bezüglich des ersten Teils (8) in einer Drehebene drehbar ist und der zweite Teil (10) einen Sitz zur Aufnahme des Wellenflansches (14) der Rotornabe (6) umfasst, wobei der Sitz sich in einer Kopplungsebene erstreckt und wobei die Drehebene und die Kopplungsebene im Wesentlichen parallel zueinander sind.

3. Werkzeug nach Anspruch 1 oder 2, wobei der dritte Teil (50) ein starres Element ist, das einen konstanten Neigungswinkel (α) zwischen der Drehebene des ersten Teils (8) und der Basisebene der Befestigungsvorrichtung definiert.

4. Werkzeug nach einem der Ansprüche 1 bis 3, wobei der Neigungswinkel (α) zwischen 2° und 5° beträgt, der Neigungswinkel (α) insbesondere zwischen 3° und 4° beträgt und der Neigungswinkel insbesondere im Wesentlichen gleich 3,5° ist.

5. Werkzeug nach einem der vorhergehenden Ansprüche, ferner mit einer Antriebseinheit (16) zum Drehen des zweiten Teils (10) bezüglich des ersten Teils (8).

6. Werkzeug nach einem der vorhergehenden Ansprüche, ferner mit einer Arbeitsplattform (18), die am ersten Teil (8) angeordnet ist, wobei die Arbeitsplattform (18) innerhalb und/oder außerhalb des ersten Teils (8) angeordnet ist.

7. Werkzeug nach einem der vorhergehenden Ansprüche, wobei der erste Teil (8) einen Eingang umfasst, der es einem Wartungsarbeiter ermöglicht, das Innere der Nabe zu betreten.

8. Offshore-Bauvorrichtung mit einem Werkzeug nach einem der vorhergehenden Ansprüche, wobei der erste Teil (8) des Werkzeugs auf einer Basisebene (12) der Offshore-Bauvorrichtung befestigt ist.

9. Offshore-Bauvorrichtung nach Anspruch 8, wobei der zweite Teil (10) bezüglich des ersten Teils (8) des Werkzeugs in einer Drehebene drehbar ist und wobei die Drehebene im Wesentlichen parallel zur Basisebene (12) der Offshore-Bauvorrichtung ist.

10. Offshore-Bauvorrichtung nach Anspruch 8, wobei das Werkzeug ferner einen dritten Teil (50) umfasst, der zwischen dem ersten Teil (8) und dem zweiten Teil (10) angeordnet ist, wobei der dritte Teil (50) dazu ausgeführt ist, eine Drehebene des zweiten Teils (10) bezüglich der Basisebene (12) der Offshore-Bauvorrichtung zu neigen.

11. Offshore-Bauvorrichtung nach einem der Ansprüche 8 bis 10, ferner mit einem Kran (30) zur Handhabung des Rotorblatts (4) während der Montage des Rotorblatts (4) an der Rotornabe (6).

12. Bauschiff oder Hubschiff mit einem Werkzeug (2) nach einem der Ansprüche 1 bis 7, wobei der erste Teil (8) des Werkzeugs (2) auf einer Basisebene (12) des Bauschiffs oder des Hubschiffs befestigt ist.

13. Verfahren zur Montage einer Windkraftanlage, wobei das Verfahren die Schritte umfasst, bei denen:
a) eine Baugruppe aus einer Rotornabe (6) und zugehörigen Rotorblättern (4) zu einer Baustelle der Windkraftanlage transportiert wird,
b) ein Wellenflansch (14) der Rotornabe (6) temporär an einem Werkzeug (2) befestigt wird, wobei der Wellenflansch (14) der Rotornabe (6) zur Befestigung an einer Welle eines Antriebsstrangs der Windkraftanlage ausgeführt ist,
c) ein erstes Rotorblatt (41) an einem ersten Blattflansch (241) der Rotornabe (6) montiert wird, wenn sich das Werkzeug (2) in einer ersten Montagestellung befindet,
d) die Rotornabe (6) zusammen mit dem montierten ersten Rotorblatt (41) am Werkzeug (2) aus der ersten Montagestellung in eine zweite Montagestellung gedreht wird,
e) ein zweites Rotorblatt (42) an einem zweiten Blattflansch (242) der Rotornabe (6) montiert wird, **dadurch gekennzeichnet, dass**
das Werkzeug (2) auf einer Basisebene (12) einer Befestigungsvorrichtung angeordnet wird, und wobei bei dem Schritt, bei dem die Rotornabe (6) zusammen mit dem montierten ersten Rotorblatt (41) gedreht wird, das montierte erste Rotorblatt (41) in einer Ebene verschwenkt wird, die aufgrund eines dritten Teils (50), der zwischen dem ersten Teil (8) und dem zweiten Teil angeordnet ist, bezüglich der Basisebene (12) der Befestigungsvorrichtung geneigt ist.

14. Verfahren nach Anspruch 13, wobei die Rotornabe (6) mehrere Blattflansche (241, 242, 243) umfasst und wobei jeder Blattflansch (241, 242, 243) zur Befestigung eines Rotorblatts (41, 42, 43) an der Rotornabe (6) ausgeführt ist, und das Verfahren ferner den Schritt umfasst, bei dem die Rotornabe (6) zusammen mit den montierten Rotorblättern (41, 42, 43) zu einer Gondel (45) der Windkraftanlage gehoben wird, nachdem alle Blattflansche (241, 242, 243) der Rotornabe (6) mit dem entsprechenden Rotorblatt (41, 42, 43) bestückt worden sind.

15. Verfahren nach Anspruch 13 oder 14, wobei das Werkzeug (2) auf einer Basisebene (12) einer Befestigungsvorrichtung angeordnet wird, und wobei bei dem Schritt, bei dem die Rotornabe (6) zusammen mit dem montierten ersten Rotorblatt (41) gedreht wird, das montierte erste Rotorblatt (41) in einer Ebene verschwenkt wird, die im Wesentlichen parallel zur Basisebene (12) der Befestigungsvorrichtung ist.

16. Verfahren nach einem der Ansprüche 13 bis 15, wobei jeder der Rotorblattflansche (241, 242, 243) der Rotornabe (6) eine Aufnahmerichtung hat, längs der ein Rotorblatt (41, 42, 43) am Rotorflansch befestigt wird, wobei benachbarte Flansche (241, 242, 243) der Rotornabe (6) in einem Winkel beabstandet sind, der zwischen einer Projektion der Aufnahmerichtungen benachbarter Blattflansche (241, 242, 243) in einer zu einer Anlagefläche des Wellenflansches (14) der Rotornabe (6) im Wesentlichen parallelen Ebene festgelegt wird, und wobei bei dem Schritt, bei dem die Rotornabe (6) zwischen der ersten Montagestellung und der zweiten Montagestellung gedreht wird, die Rotornabe (6) um einen Winkel gedreht wird, der im Wesentlichen gleich dem Winkel zwischen benachbarten Blattflanschen (241, 242, 243) ist.

## Revendications

1. Outil (2) pour le montage de pales de rotor (4) sur un moyeu de rotor (6) d'une génératrice pour éolienne, l'outil comportant une première partie (8) et une deuxième partie (10), la première partie (8) étant réalisée de manière à être montée sur un plan de base (12) d'un dispositif de montage et la deuxième partie (10) étant réalisée de manière à recevoir une bride d'arbre (14) du moyeu de rotor (6), la bride d'arbre (14) du moyeu de rotor (6) étant réalisée de manière à être montée sur un arbre du train d'entraînement de la génératrice pour éolienne, et la deuxième partie (10) étant rotative par rapport à la première partie (8), l'outil étant **caractérisé par** une troisième partie (50) agencée entre la première partie (8) et la deuxième partie (10), la troisième partie (50) étant réalisée de manière à incliner un plan de rotation de la deuxième partie (10) par rapport à la première partie (8).

2. Outil (2) selon la revendication 1, la deuxième partie (10) étant rotative par rapport à la première partie (8) dans un plan de rotation et la deuxième partie (10) présentant un support pour recevoir la bride d'arbre (14) du moyeu de rotor (6), le support s'étendant dans un plan d'accouplement, et le plan de rotation et le plan d'accouplement étant sensiblement parallèles l'un par rapport à l'autre.

3. Outil selon la revendication 1 ou 2, la troisième partie (50) étant un membre rigide qui définit un angle d'inclinaison constant (α) entre le plan de rotation de la première partie (8) et le plan de base du dispositif de montage.

4. Outil selon l'une des revendications 1 à 3, l'angle d'inclinaison (α) étant compris entre 2° et 5°, l'angle d'inclinaison (α) étant en particulier compris entre 3° et 4°, et l'angle d'inclinaison étant en particulier sensiblement égal à 3,5°.

5. Outil selon l'une des revendications précédentes, comportant en outre une unité d'entraînement (16) pour tourner la deuxième partie (10) par rapport à la première partie (8).

6. Outil selon l'une des revendications précédentes, comportant en outre une plateforme de travail (18) qui est agencée sur la première partie (8), la plateforme de travail (18) étant agencée à l'intérieur et/ou à l'extérieur de la première partie (8).

7. Outil selon l'une des revendications précédentes, la première partie (8) comportant une entrée permettant à un agent de service d'entrer à l'intérieur du moyeu.

8. Dispositif de construction offshore comportant un outil selon l'une des revendications précédentes, la première partie (8) de l'outil étant montée sur un plan de base (12) du dispositif de construction offshore.

9. Dispositif de construction offshore selon la revendication 8, la deuxième partie (10) étant rotative par rapport à la première partie (8) de l'outil dans un plan de rotation, et le plan de rotation étant sensiblement parallèle au plan de base (12) du dispositif de construction offshore.

10. Dispositif de construction offshore selon la revendication 8, l'outil comportant en outre une troisième partie (50) agencée entre la première partie (8) et la deuxième partie (10), la troisième partie (50) étant réalisée de manière à incliner un plan de rotation de la deuxième partie (10) par rapport au plan de base (12) du dispositif de construction offshore.

11. Dispositif de construction offshore selon l'une des revendications 8 à 10, comportant en outre une grue (30) pour le maniement de la pale de rotor (4) pendant l'assemblage de la pale de rotor (4) sur le moyeu de rotor (6).

12. Bateau de construction ou barge autoélévatrice comportant un outil (2) selon l'une des revendications 1 à 7, la première partie (8) de l'outil (2) étant montée sur un plan de base (12) du bateau de construction ou de la barge autoélévatrice.

13. Procédé d'assemblage d'une génératrice pour éolienne, le procédé comprenant les étapes dans lesquelles :
a) un ensemble d'un moyeu de rotor (6) et de pales de rotor associées (4) est transporté vers un chantier de la génératrice pour éolienne,
b) une bride d'arbre (14) du moyeu de rotor (6) est montée de manière temporaire sur un outil (2), la bride d'arbre (14) du moyeu de rotor (6) étant réalisée de manière à être montée sur un arbre d'un train d'entraînement de la génératrice pour éolienne,
c) une première pale de rotor (41) est montée sur une première bride de pale (241) du moyeu de rotor (6) lorsque l'outil (2) se trouve dans une première position de montage,
d) le moyeu de rotor (6) est tourné sur l'outil (2) ensemble avec la première pale de rotor (41) montée depuis la première position de montage vers une deuxième position de montage,
e) une deuxième pale de rotor (42) est montée sur une deuxième bride de pale (242) du moyeu de rotor (6), **caractérisé en ce que**
l'outil (2) est agencé sur un plan de base (12) d'un dispositif de montage et l'étape dans laquelle le moyeu de rotor (6) est tourné ensemble avec la première pale de rotor (41) montée comprend le pivotement de la première pale de rotor (41) montée dans un plan incliné par rapport au plan de base (12) du dispositif de montage grâce à une troisième partie (50) qui est agencée entre la première partie (8) et la deuxième partie.

14. Procédé selon la revendication 13, le moyeu de rotor (6) comprenant un nombre de brides de pale (241, 242, 243) et chaque bride de pale (241, 242, 243) étant réalisée pour le montage d'une pale de rotor (41, 42, 43) sur le moyeu de rotor (6), et le procédé comprenant en outre l'étape dans laquelle le moyeu de rotor (6) est soulevé ensemble avec les pales de rotor (41, 42, 43) montées vers une nacelle (45) de la génératrice pour éolienne après l'équipement de toutes les brides de pale (241, 242, 243) du moyeu de rotor (6) de la pale de rotor (41, 42, 43) correspondante.

15. Procédé selon la revendication 13 ou 14, l'outil (2) étant agencé sur un plan de base (12) d'un dispositif de montage et l'étape dans laquelle le moyeu de rotor (6) est tourné ensemble avec la première pale de rotor (41) montée comprenant le pivotement de la première pale de rotor (4) montée dans un plan qui est sensiblement parallèle au plan de base (12) du dispositif de montage.

16. Procédé selon l'une des revendications 13 à 15, chacune des brides de pale de rotor (241, 242, 243) du moyeu de rotor (6) présentant un sens de logement le long duquel une pale de rotor (41, 42, 43) est montée sur la bride de rotor, des brides adjacentes (241, 242, 243) du moyeu de rotor (6) étant espacées selon un angle qui est déterminé entre une projection des sens de logement de brides de pale adjacentes (241, 242, 243) dans un plan sensiblement parallèle à une surface de contact de la bride d'arbre (14) du moyeu de rotor (6), et l'étape dans laquelle le moyeu de rotor (6) est tourné entre la première position de montage et la deuxième position de montage comprenant la rotation du moyeu de rotor (6) selon un angle qui est sensiblement égal à l'angle entre des brides de pale adjacentes (241, 242, 243).
